(19) Europäisches Patentamt
European Patent Office
Office européen des brevets

(11) **EP 3 954 721 B1**

(12) **EUROPEAN PATENT SPECIFICATION**

(45) Date of publication and mention
of the grant of the patent:
**21.06.2023 Bulletin 2023/25**

(21) Application number: **20787501.4**

(22) Date of filing: **07.04.2020**

(51) International Patent Classification (IPC):
*C08F 261/04* (2006.01)   *C08K 7/06* (2006.01)
*C08L 51/00* (2006.01)   *H01M 4/02* (2006.01)
*H01M 4/04* (2006.01)   *H01M 4/131* (2010.01)
*H01M 4/1391* (2010.01)   *H01M 4/505* (2010.01)
*H01M 4/525* (2010.01)   *H01M 4/62* (2006.01)
*C08K 3/04* (2006.01)   *C09D 151/00* (2006.01)

(52) Cooperative Patent Classification (CPC):
(C-Sets available)
**C09D 151/003; C08F 261/04; C08L 51/003;
H01M 4/131; H01M 4/622; H01M 4/625;**
H01M 2004/028; Y02E 60/10   (Cont.)

(86) International application number:
**PCT/JP2020/015704**

(87) International publication number:
**WO 2020/209260 (15.10.2020 Gazette 2020/42)**

(54) **COMPOSITION**

ZUSAMMENSETZUNG

COMPOSITION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.04.2019 JP 2019074147**

(43) Date of publication of application:
**16.02.2022 Bulletin 2022/07**

(73) Proprietor: **Denka Company Limited
Tokyo 103-8338 (JP)**

(72) Inventors:
• **NAKANISHI, Soichiro
Tokyo 103-8338 (JP)**
• **NARUTOMI, Takuya
Tokyo 103-8338 (JP)**
• **SUZUKI, Shigeru
Tokyo 103-8338 (JP)**
• **WATANABE, Jun
Tokyo 103-8338 (JP)**

(74) Representative: **Gulde & Partner
Patent- und Rechtsanwaltskanzlei mbB
Wallstraße 58/59
10179 Berlin (DE)**

(56) References cited:
**EP-A1- 3 922 652      EP-A1- 3 922 653
WO-A1-2015/053224   WO-A1-2018/230599
JP-A- 2016 066 601     US-A1- 2018 366 732
US-B2- 9 318 743**

(52) Cooperative Patent Classification (CPC): (Cont.)

C-Sets
**C08F 261/04, C08F 220/06, C08F 220/282;**
**C08F 261/04, C08F 220/44, C08F 220/1812;**
**C08F 261/04, C08F 220/44, C08F 220/24;**
**C08F 261/04, C08F 220/44, C08F 220/282;**
**C08L 51/003, C08K 3/04, C08L 29/04;**
**C08L 51/003, C08K 7/06, C08L 29/04**

**Description**

**Technical Field**

The present invention relates to a composition, a slurry for a positive electrode, and a battery.

**Background Art**

In recent years, a secondary battery has been used as a power source for electronic devices such as notebook computers, mobile phones. Moreover, the development of hybrid vehicles and electric vehicles using secondary batteries is promoted to reduce the environmental load. Secondary batteries having high energy density, high voltage, and high durability are required for their power sources. Lithium ion secondary batteries are attracting attention as secondary batteries that can achieve high voltage and high energy density.

A lithium ion secondary battery is composed of a positive electrode, a negative electrode, an electrolyte, and a separator. The positive electrode is composed of a positive electrode active material, a conductive auxiliary agent, a metal foil, and a binder (Patent Literatures 1 to 3).

As a binder for positive electrode for a lithium ion secondary battery, a binder (a graft copolymer), having high binding properties and oxidation resistance and mainly composed of polyvinyl alcohol and polyacrylonitrile is disclosed (Patent Literature 4).

**Citation List**

**Patent Literature**

Patent Literature 1 :JP2013-98123
Patent Literature 2 :JP2013-84351
Patent Literature 3 :JPH6-172452
Patent Literature 4 :WO2015/053224
Patent Literature 5: EP 3 922 652 A1
Patent Literature 6: EP 3 922 653 A1
Patent Literature 7: JP 2016 066601 A
Patent Literature 8: US 9 318 743 B2
Patent Literature 9: US 2018/366732 A1
Patent Literature 10: WO 2018/230599 A1

**Summary of Invention**

**Technical Problem**

However, it is further desired to develop a composition which can serve as a binder having with excellent cycle capacity retention rate at high temperatures, a slurry for a positive electrode, and a secondary battery using the composition.

The present invention was made in consideration of such problems and provides a composition serving as a binder having with excellent cycle capacity retention rate at high temperatures, a slurry for a positive electrode, and a secondary battery using the composition.

**Solution to Problem**

According to the present invention, a composition comprising a graft copolymer is provided, wherein the graft copolymer has a stem polymer and a plurality of branch polymers, the stem polymer has a polyvinyl alcohol structure, each of a first monomer unit and a second monomer unit being included in at least one of the plurality of branch polymers, the second monomer unit is different from the first monomer unit, a glass transition temperature of the composition is 260K to 365K, wherein when a content of the polyvinyl alcohol structure in the composition is $C_{PVA}$% by mass, and a total content of the first monomer unit and the second monomer unit in the composition is $C_M$% by mass, a ratio of the content of the polyvinyl alcohol structure to the total content of the polyvinyl alcohol structure, the first monomer unit and the second monomer unit ($C_{PVA}/(C_M+C_{PVA})$) is 0.25 to 0.3, and the second monomer unit is a alkoxypolyethylene glycol (meth) acrylate monomer unit.

The present inventors have made intensive studies and found that, by using a composition having a graft copolymer which has a structure in which the first monomer unit and the second monomer unit (different from the first monomer unit) are graft-copolymerized with respect to a stem polymer having a polyvinyl alcohol structure, and a glass transition temperature within a predetermined range, a binder with excellent cycle capacity retention rate at high temperatures can be obtained, completing the present invention.

The following are examples of various embodiments of the present invention. The embodiments shown below can be combined with each other.

Preferably, the composition further contains a free polymer, the free polymer does not have a covalent bond with the graft copolymer, and the free polymer contains at least one selected from the group consisting of a polymer having the polyvinyl alcohol structure and a polymer having the first monomer unit and/or the second monomer unit.

Preferably, the first monomer unit is a (meth) acrylonitrile monomer unit and/or a (meth)acrylic acid monomer unit.

Preferably, when a content of the first monomer unit is $PM_1$ mol%, and a content of the second monomer unit is $PM_2$ mol%, a ratio of an amount of the first monomer unit by mole to a total amount of the first monomer unit and the second monomer unit by mole contained in the composition ($PM_1/(PM_2+PM_1)$) is 0.1 to 0.9.

Preferably, at least one of the plurality of branch polymers has a copolymerization structure of the first monomer unit and the second monomer unit.

Preferably, an average polymerization degree of the polyvinyl alcohol structure in the composition is 300 to 4000.

Preferably, a saponification degree of the polyvinyl alcohol structure in the composition is 60 to 100 mol%.

Preferably, a graft ratio of the graft copolymer is 40 to 3000%.

According to another aspect of the present invention, a slurry for a positive electrode containing the composition, a positive electrode active material, and a conductive auxiliary agent is provided.

Preferably, a solid content of the composition with respect to a total solid content in the slurry for the positive electrode is 1 to 20% by mass.

Preferably, the cathode active material contains at least one selected from the group consisting of: Li-$Ni_XMn_{(2-X)}O_4$ (0<X<2); $Li(Co_XNi_YMn_Z)O_2$ (0<X<1, 0<Y<1, 0<Z<1, and X+Y+Z=1); and $Li(Ni_XCo_YAl_Z)O_2$ (0<X<1, 0<Y<1, 0<Z<1, and X+Y+Z=1).

Preferably, the conductive auxiliary agent is at least one selected from the group consisting of (i) fibrous carbon, (ii) carbon black, and (iii) a carbon composite in which fibrous carbon and carbon black are interconnected.

According to another aspect of the present invention, a positive electrode comprising a metal foil and a coating film of the slurry for the positive electrode formed on the metal foil is provided.

According to another aspect of the present invention, a battery comprising the positive electrode is provided.

According to another aspect of the present invention, a binder containing the composition is provided.

**Advantageous Effects of Invention**

The present invention provides a composition with an excellent cycle capacity retention rate at high temperatures.

**Description of Embodiments**

The following is an explanation of the embodiments of the present invention. The various features shown in the following embodiments can be combined with each other. In addition, the invention is independently established for each property.

1. Composition

A composition according to one embodiment of the present invention is a composition containing a graft copolymer, wherein the graft copolymer is a composition having a stem polymer and a plurality of branch polymers.

The graft copolymer of one embodiment of the invention is synthesized by graft-copolymerizing a first monomer and a second monomer to the stem polymer. Here, the first monomer is a different monomer from the second monomer. The branch polymer produced by the polymerization is grafted to the stem polymer, that is, covalently bonded to the stem polymer. In this process, the ungrafted stem polymer and the polymer containing the first monomer and/or the second monomer which is not grafted to the stem polymer, that is, which is not covalently bound to the graft copolymer, may be simultaneously generated as a free polymer. Thus, the composition of one embodiment of the present invention preferably consists substantially of the graft copolymer and the free polymer. In addition, monomers other than the first monomer and second monomer may be polymerized as long as the effect of the present invention is not impaired.

The graft ratio of the graft copolymer is preferably 40 to 3000%, and more preferably 300 to 1500%. From the viewpoint of solubility, the graft ratio is preferably within the above range. If the graft ratio is 40% or higher, the solubility in NMP (N-methyl pyrrolidone) is improved. If the graft ratio is 3000% or lower, the viscosity of the NMP solution is reduced and the fluidity of the NMP solution is improved.

## 1-2. Stem polymer

The stem polymer has a polyvinyl alcohol structure. Here, the polyvinyl alcohol structure is derived from polyvinyl alcohol, for example, which is synthesized by polymerizing a vinyl acetate monomer to obtain polyvinyl acetate and saponifying the polyvinyl acetate. Preferably, the stem polymer is composed mainly of the polyvinyl alcohol structure. More preferably, the stem polymer is polyvinyl alcohol.

The average polymerization degree of the polyvinyl alcohol structure in the composition is preferably 300 to 4000, and more preferably 500 to 2000. When the average polymerization degree is in the above range, the stability of the slurry is particularly high. It is also preferable to be in the above range in terms of solubility, binding properties, and viscosity of the binder. When the average polymerization degree is 300 or higher, the bonding between the binder and the active material and conductive auxiliary agent is improved, and durability is enhanced. When the average polymerization degree is 4000 or less, solubility is improved and viscosity is reduced, making it easier to manufacture the slurry for the positive electrode. The average polymerization degree here is the value measured by the method according to JIS K 6726.

The saponification degree of the polyvinyl alcohol structure in the composition is preferably 60 to 100 mol%, and more preferably 80 to 100 mol%. When the saponification degree is in the above range, the stability of the slurry is particularly high. The saponification degree here is the value measured by the method according to JIS K 6726.

## 1-3. Branch polymer

Each of the first monomer unit and the second monomer unit is contained in at least one of the plurality of branch polymers. That is, only one of the first monomer unit and the second monomer unit may be included in one of the plurality of branch polymers, and both of the first monomer unit and the second monomer unit may be included in one of the plurality of branch polymers. Further, a monomer unit other than the first monomer unit and the second monomer unit may be contained as long as the effect of the present invention is not impaired. Here, the first monomer unit and the second monomer unit are monomer units derived from the first monomer and the second monomer used in the synthesis of the graft copolymer, respectively. Preferably, at least one of the plurality of branch polymers has a copolymerization structure of the first monomer unit and the second monomer unit. The branched polymer is preferably a copolymer substantially comprising of the first monomer unit and the second monomer unit, and more preferably a copolymer consisting of only the first monomer unit and the second monomer unit.

## 1-4. Free polymer

The composition according to one embodiment of the present invention may further contain a free polymer. The free polymer is at least one selected from a polymer having a polyvinyl alcohol structure and a polymer having the first monomer unit and/or the second monomer unit. The polymer having a polyvinyl alcohol structure mainly means the stem polymer which was not involved in the graft-copolymerization. The polymer having the first monomer unit and/or the second monomer unit means a homopolymer of the first monomer, a homopolymer of the second monomer, a copolymer containing the first monomer and the second monomer, and the like, which is not copolymerized to the graft copolymer (i.e., the stem polymer).

In addition, as long as the effect of the present invention is not impaired, a homopolymer of a monomer other than the first monomer and the second monomer and a copolymer of the monomer other than the first monomer and the second monomer, may be included. The free polymer is preferably a copolymer comprising substantially of the first monomer and the second monomer, and even more preferably a copolymer consisting of only the first monomer and the second monomer.

In addition, a weight average molecular weight of the free polymer other than the stem polymer, such as a homopolymer of the first monomer, a homopolymer of the second monomer, and a copolymer containing the first monomer and the second monomer is preferably 30,000 to 300,000, more preferably 40000 to 200,000, and more preferably 50000 to 150000. From the viewpoint of suppressing the increase in viscosity and easily producing the slurry for positive electrodes, the weight average molecular weight of the free polymer other than the stem polymer is preferably 300,000 or less, more preferably 200,000 or less, and still more preferably 1500,00 or less. The weight average molecular weight of the free polymer other than the stem polymer can be determined by GPC (gel permeation chromatography).

1-5. First monomer unit

The first monomer unit is preferably a (meth) acrylonitrile monomer unit and/or a (meth) acrylic acid monomer unit. The first monomer unit is more preferably a (meth) acrylonitrile monomer unit and is still more preferably an acrylonitrile monomer unit.

That is, the first monomer used to synthesize the graft copolymer is preferably (meth) acrylonitrile and/or (meth) acrylic acid, more preferably (meth) acrylonitrile, and still more preferably acrylonitrile. Thus, the first monomer unit has a structure derived from these.

1-6. Second monomer unit

The second monomer unit is not particularly limited as long as it is different from the first monomer unit. Examples of the second monomer unit include,an alkoxy polyethylene glycol (meth) acrylate such as (2- (2-ethoxy) ethoxy) ethyl (meth) acrylate, methoxypolyethylene glycol (meth) acrylate (poly: n= 23), methoxydipropylene glycol (meth) acrylate, 3,6,9,12,15-pentaoxa-1-heptadecene; alkyl (meth) acrylate such as dodecyl (meth) acrylate, 2,2,3,3,3-pentafluoropropyl (meth) acrylate; polyethylene glycol monovinyl ether (poly: 3). Among these, alkoxypolyethylene glycol (meth) acrylate is preferred.

1-7. Content and property

Preferably, the following requirements are satisfied about the content of each component and the properties. When the content of each component and properties are in the following range, a composition for a positive electrode serving as a binder having with excellent cycle capacity retention rate at high temperatures can be provided.

The composition has a glass transition temperature of 260K to 365K, preferably 280K to 350K, and more preferably 300K to 340K. Within such a range, the cycle capacity retention rate at high temperatures is excellent. Specifically, the glass transition temperature is, for example, 260, 265, 270, 275, 280, 285, 290, 295, 300, 305, 310, 315, 320, 325, 330, 335, 340, 345, 350, 355,360, 365K, and may be in the range between the two values exemplified herein. The glass transition here means a change in which the viscosity of a substance having fluidity at a high temperature rapidly increases in a certain temperature range due to a temperature drop, and the substance loses fluidity and becomes an amorphous solid. The method for measuring the glass transition temperature is not particularly limited, but the glass transition temperature refers to the glass transition temperature calculated by thermogravimetric measurement, differential scanning calorimetry, differential calorimetry, dynamic viscoelasticity measurement, or the like. Among these, differential scanning calorimetry is preferable.

The composition contains a polyvinyl alcohol structure. When a content of the polyvinyl alcohol structure in the composition is $C_{PVA}$% by mass, and a total content of the first monomer unit and the second monomer unit in the composition is $C_M$% by mass, a ratio of the content of the polyvinyl alcohol structure to the total content of the polyvinyl alcohol structure, the first monomer unit and the second monomer unit ($C_{PVA}/(C_M+C_{PVA})$) is preferably 0.05 to 0.7, more preferably 0.10 to 0.55. It is preferably in the above range from the viewpoint of solubility, binding property, and viscosity of the binder. When it is 0.05 or more, the binding property between the binder and the active material and the conductive auxiliary agent is improved and the durability is improved. When it is 0.7 or less, the solubility is improved and a uniform resin solution is likely to be obtained, so that a slurry for a positive electrode can be easily produced. The ratio ($C_{PVA}/(C_M+C_{PVA})$) is specifically, for example, 0.05, 0.10, 0.15, 0.20, 0.25, 0.30, 0.35, 0.40, 0.45, 0.50, 0.55, 0.60, 0.65, 0.70 and may be within the range between the numerical values exemplified herein.

When the content of the first monomer unit is $PM_1$ mol%, and the content of the second monomer unit is $PM_2$ mol%, a ratio of an amount of the first monomer unit by mole to a total amount of the first monomer unit and the second monomer unit by mole contained in the composition ($PM_1/(PM_2+PM_1)$) is preferably 0.1 to 0.9, more preferably 0.2 to 0.9. When the ratio is in the above range, the cycle capacity retention rate at high temperatures can be excellent. The ratio is specifically, for example, 0.1, 0.2, 0.3, 0.4, 0.5, 0.6, 0.7, 0.8, 0.9, and may be within the range between the numerical values exemplified herein.

1-8. Various measurement/calculation method

(Total content of first monomer unit and second monomer unit)

The composition comprises the PVA component and the first monomer component, and the second monomer component, and the composition ratio ($PVA/PM_1/PM_2$) in the composition is determined by the charged amount (g) in the polymerization and the polymerization rate of the first and the second monomer. The polymerization rate (%) can be determined by NMR.

The total content (% by mass) of the first monomer unit and the second monomer unit in the composition is calculated by the following formula (2). The amount of PVA charged is calculated based on "the total content of the first monomer unit and the second monomer unit", and this amount of PVA charged can be regarded as "the content of the polyvinyl alcohol structure".

$$((A \times B/100 + C \times D/100)/(A \times B/100 + C \times D/100 + E)) \times 100(\%) \quad ---(2)$$

A: Mass of the first monomer used for copolymerization (charged amount)
B: Polymerization rate (%) of the first monomer after the reaction
C: Mass of the second monomer used for copolymerization (charged amount)
D: Polymerization rate (%) of the second monomer after the reaction
E: Mass of PVA used for polymerization (charged amount)

The total content (% by mass) of the first monomer unit and the second monomer unit can also be calculated from the integration ratio by NMR. When the integral value per proton of polyvinyl alcohol is $S_{PVA}$ and each of the integral values per proton of the first monomer and the second monomer is $S_1$ and $S_2$, the total content of the first monomer unit and the second monomer unit can be calculated by the following formula (2-2).

$$(S_1 + S_2) \times 100/(S_{PVA} + S_1 + S_2) \quad ---(2-2)$$

(Ratio of the first monomer and the second monomer unit)

The content ratio (% by mass) of the first monomer unit to the total amount of the first monomer unit and the second monomer unit in the composition can be obtained from the following formula (3).

$$((A \times B/100)/(A \times B/100 + C \times D/100)) \times 100(\%) \quad ---(3)$$

The content ratio (% by mass) of the first monomer unit to the total amount of the first monomer unit and the second monomer unit in the composition can also be determined from the following formula (3-2).

$$(S_1 \times 100)/(S_1 + S_2) \quad ---(3-2)$$

(Graft rate)

When a graft copolymer is produced (during graft copolymerization), a homopolymer of the first monomer and a homopolymer of the second monomer may be produced. Therefore, the method for producing the graft copolymer requires a step of separating the homopolymers from the graft copolymer.
The homopolymers dissolve in dimethylformamide (hereinafter, it may be abbreviated as DMF), but PVA and the graft copolymer are not dissolved in DMF. Using the difference in solubility, the homopolymers can be separated by an operation such as centrifugation.
The graft ratio is calculated by the following formula (4).

$$((G-F)/(G \times (100-H)/100)) \times 100 \quad ---(4)$$

F: Mass (g) of the component dissolved in DMF
G: Mass (g) of the composition used in the test
H: Total content (% by mass) of the first monomer unit and the second monomer unit in the composition

(Glass transition temperature)

In the present description, the glass transition point (Tg) is measured as follows.
Differential scanning calorimetry (DSC) is performed according to JIS K 7121: 1987. Then, the intersection of the tangent line at the baseline and the tangent line at the steeply descending position in the endothermic region due to the glass transition in the DSC curve is defined as Tg.

1-9. Method for producing graft copolymer

The method for producing the graft copolymer according to one embodiment of the present invention is not particularly limited. The method of polymerizing to obtain polyvinyl acetate, then saponifying the polyvinyl acetate to obtain polyvinyl alcohol, and graft-copolymerizing the first monomer, the second monomer, and other monomers to polyvinyl alcohol is preferable.

As a method for polymerizing to obtain polyvinyl acetate, any known method such as bulk polymerization or solution polymerization can be used.

Examples of a initiator used for the polymerization of polyvinyl acetate include azo initiators such as azobisisobutyronitrile, and organic peroxides such as benzoyl peroxide and bis (4-t-butylcyclohexyl) peroxydicarbonate.

The saponification reaction of polyvinyl acetate can be performed, for example, by a method of saponifying in an organic solvent in the presence of a saponification catalyst.

Examples of the organic solvent include methanol, ethanol, propanol, ethylene glycol, methyl acetate, ethyl acetate, acetone, methyl ethyl ketone, benzene, toluene, and the like. One or more of these may be used alone or in combination. Among these, methanol is preferred.

Examples of the saponification catalyst include basic catalysts such as sodium hydroxide, potassium hydroxide, and sodium alkoxide, and acidic catalysts such as sulfuric acid and hydrochloric acid. Among these, sodium hydroxide is preferable from the viewpoint of the saponification rate.

Examples of a method for graft-copolymerizing a monomer with polyvinyl alcohol include a solution polymerization method. Examples of the solvent used for the polymerization method include dimethyl sulfoxide, N-methylpyrrolidone, and the like.

Examples of an initiator used for graft copolymerization include organic peroxides such as benzoyl peroxide, azo compounds such as azobisisobutyronitrile, potassium peroxodisulfate, ammonium peroxodisulfate, and the like.

The graft copolymer of one embodiment of the present invention can be used by dissolving in a solvent. Examples of the solvent include dimethyl sulfoxide, N-methylpyrrolidone, and the like. The composition and a slurry for a positive electrode described later may contain the solvent.

1-10. Other component

The composition according to one embodiment of the present invention may contain other components such as the resin or the like as long as the effects of the present invention are not impaired. Examples of the resin include a fluorine-based resin such as polyvinylidene fluoride (PVDF) and polytetrafluoroethylene, a styrene-butadiene copolymer (styrene butadiene rubber and the like), and a (meth) acrylic copolymer. Among these, a fluorine-based resin is preferable from the viewpoint of stability. Polyvinylidene fluoride is particularly preferable.

2. Slurry for positive electrode

A slurry for a positive electrode according to one embodiment of the present invention comprises the above composition and is excellent in stability. The slurry for the positive electrode according to one embodiment of the present invention contains the above-mentioned composition and is low viscosity. The slurry for the positive electrode according to one embodiment of the present invention includes the above-mentioned composition, and a positive electrode having excellent rate characteristics can be produced by the slurry. The slurry for the positive electrode may contain a composition and a conductive auxiliary agent or may contain a composition, positive electrode active materials, and a conductive auxiliary agent.

The viscosity of the slurry for the positive electrode according to one embodiment of the present invention is preferably 350 mPa s or less, and more preferably 300 mPa s or less. The viscosity of the slurry was measured by a method according to JIS Z 8803: 2011 by a cone-and-plate rotary viscometer (Measuring instrument: MCR302 manufactured by Kitahama Seisakujo Corporation, measurement temperature: 25°C, rotational speed: $1s^{-1}$).

A solid content of the composition for the positive electrode (binder) in the slurry for the positive electrode according to one embodiment of the present invention is preferably 0.1 to 20% by mass, and more preferably 1 to 10% by mass.

3. Lithium ion secondary battery

The battery according to one embodiment of the present invention preferably comprises a positive electrode. The battery comprising the positive electrode is preferably a secondary battery. The secondary battery is preferably one or more selected from a lithium ion secondary battery, a sodium ion secondary battery, a magnesium ion secondary battery, and a potassium ion secondary battery. It is more preferably a lithium ion secondary battery.

The positive electrode and the lithium ion secondary battery comprising the positive electrode according to one embodiment of the present invention can be produced using the slurry for the positive electrode including the above-mentioned composition. Preferably, the lithium ion secondary battery comprises the above-mentioned positive electrode, negative electrode, separator, and electrolyte solution (hereinafter it may be referred to as electrolytes and electrolyte solution).

[Positive electrode]

The positive electrode according to one embodiment of the present invention is produced by applying the slurry for the positive electrode containing the composition, the conductive auxiliary agent, and the positive electrode active material, which is used as needed, onto a current collector such as an aluminum foil, then heating to remove the solvent contained in the slurry, and further pressurizing the current collector and the electrode mixture layer with a roll press or the like to bring them into close contact with each other. That is, a positive electrode having a metal foil and a coating film of a slurry for a positive electrode formed on the metal foil can be obtained.

A metal foil is preferable as the current collector for the positive electrode. The metal foil for the positive electrode is preferably foil-like aluminum, and the thickness of the foil is preferably 5 to 30 $\mu$m from the viewpoint of workability.

[Conductive auxiliary agent]

The conductive auxiliary agent is preferably at least one selected from the group consisting of (i) fibrous carbon, (ii) carbon black, and (iii) a carbon composite in which fibrous carbon and carbon black are interconnected.

Examples of the fibrous carbon include vapor growth carbon fibers, carbon nanotubes, carbon nanofibers, and the like. Examples of the carbon black include acetylene black, furnace black, Ketjenblack (registered trademark), and the like. These conductive auxiliary agents may be used alone or in combination of two or more. Among these, at least one selected from acetylene black, carbon nanotube, and carbon nanofiber is preferable from the viewpoint of high effect of improving the dispersibility of the conductive auxiliary agent.

The slurry for the positive electrode according to one embodiment of the present invention preferably has a solid content of the conductive auxiliary agent of 0.01 to 20% by mass with respect to the total solid content in the slurry for the positive electrode, and it is more preferably 0.1 to 10% by mass.

[Positive electrode active material]

A positive electrode active material may be used as needed. The positive electrode active material is preferably a positive electrode active material capable of reversibly absorbing and releasing cations. The positive electrode active material is preferably a lithium-containing composite oxide containing Mn or lithium-containing polyanionic compound having a volume resistivity of $1 \times 10^4$ $\Omega \cdot$cm or more. Examples include $LiCoO_2$, $LiMn_2O_4$, $LiNiO_2$, $LiMPO_4$, $Li_2MSiO_4$, $LiNi_XMn_{(2-X)}O_4$, $Li(Co_XNi_YMn_Z)O_2$, $Li(Ni_XCo_YAl_Z)O_2$, $XLi_2MnO_3$-$(1-X)LiMO_2$ and the like. Preferably, X in LiNiXMn (2-X) $O_4$ satisfies 0<X<2. Preferably, X, Y, and Z in $Li(Co_XNi_YMn_Z)O_2$ and Li $(Ni_XCo_YAl_Z)O_2$ satisfy X+Y+Z=1 and 0<X<1, 0<Y<1, 0<Z<1. Preferably, X in $XLi_2MnO_3$-$(1-X)LiMO_2$ satisfies 0<X<1. Preferably, M in $LiMPO_4$, $Li_2MSiO_4$, and $XLi_2MnO_3$-$(1-X)LiMO_2$ are preferably one or more of the elements selected from Fe, Co, Ni, and Mn.

The positive electrode active material is preferably at least one selected from the group consisting of: $LiNi_XMn_{(2-X)}O_4$ (0<X<2); $Li(Co_XNi_YMn_Z)O_2$ (0<X<1, 0<Y<1, 0<Z<1, and X+Y+Z=1); and $Li(Ni_XCo_YAl_Z)O_2$ (0<X<1, 0<Y<1, 0<Z<1, and X+Y+Z=1), and more preferably one selected from the group consisting of: $LiNi_XMn_{(2-X)}O_4$ (0<X<2); $Li(Co_XNi_YMn_Z)O_2$ (0<X<1, 0<Y<1, 0<Z<1, and X+Y+Z=1).

Preferably, the slurry for the positive electrode according to one embodiment of the present invention preferably has the solid content of the positive electrode active material of 50 to 99.8% by mass with respect to the total solid content of in the slurry for the positive electrode, more preferably 80 to 99.5% by mass, and most preferably 95 to 99.0% by mass.

[Negative pole]

The negative electrode used in the lithium ion secondary battery according to one embodiment of the present invention is not particularly limited, and it can be manufactured using a slurry for a negative electrode containing a negative electrode active material. This negative electrode can be manufactured using, for example, a negative electrode metal foil and the slurry for a negative electrode provided on the metal foil. The slurry for a negative electrode preferably includes a negative electrode binder (a composition for a negative electrode), a negative electrode active material, and the above-described conductive auxiliary agent. The negative electrode binder is not particularly limited. Examples of the negative electrode binder include polyvinylidene fluoride, polytetrafluoroethylene, a styrene-butadiene copolymer (a styrene-butadiene rubber and the like), an acrylic copolymer, and the like may be used. The negative electrode binder is preferably a fluorine-based resin. As the fluorine-based resin, one or more of the group consisting of polyvinylidene fluoride and polytetrafluoroethylene is preferable, and polyvinylidene fluoride is more preferable.

Examples of the negative electrode active material used for the negative electrode include carbon materials such as graphite, polyacene, carbon nanotubes, and carbon nanofibers, alloy materials such as tin and silicon, and oxidation such as tin oxide, silicon oxide, lithium titanate, and the like. These can be used alone, or two or more of these can be used.

The metal foil for the negative electrode is preferably foil-like copper, and the thickness of the foil is preferably 5 to 30 from the viewpoint of workability. The negative electrode can be manufactured using the slurry for the negative electrode and the metal foil for the negative electrode by the method according to the above-mentioned manufacturing method for the positive electrode.

[Separator]

The separator is not particularly limited as long as it has sufficient strength. The examples of the separator include an electrical insulating porous membrane, a mesh, a nonwoven fabric, and the like. In particular, it is preferable to use a material that has low resistance to ion migration of the electrolytic solution and is excellent in solution holding. The material is not particularly limited, and examples thereof include inorganic fibers such as glass fibers or organic fibers, a synthetic resin such as polyethylene, polypropylene, polyester, polytetrafluoroethylene, and polyflon and layered composites thereof. From the viewpoints of binding properties and safety, polyethylene, polypropylene, or layered composites thereof is preferable.

[Electrolyte]

As the electrolyte, any known lithium salt can be used. Examples of the electrolyte include $LiClO_4$, $LiBF_4$, $LiBF_6$, $LiPF_6$, $LiCF_3SO_3$, $LiCF_3CO_2$, $LiAsF_6$, $LiSbF_6$, $LiB_{10}Cl_{10}$, $LiAlCl_4$, $LiCl$, $LiBr$, $LiI$, $LiB(C_2H_5)_4$, $LiCF_3SO_3$, $LiCH_3SO_3$, $LiCF_3SO_3$, $LiC_4F_9SO_3$, $LiN(CF_3SO_2)_2$, $LiN(C_2F_5SO_2)_2$, $LiC(CF_3SO_2)_3$, lithium fatty acid carboxylate, and the like.

[Electrolyte solution]

The electrolyte solution dissolving the electrolyte is not particularly limited. Examples of the electrolyte solution include: carbonates such as propylene carbonate, ethylene carbonate, dimethyl carbonate, diethyl carbonate and methyl ethyl carbonate; lactones such as $\gamma$-butyrolactone; ethers such as trimethoxymethane, 1,2-dimethoxyethane, diethyl ether, 2-ethoxyethane, tetrahydrofuran and 2-methyltetrahydrofuran; sulfoxides such as dimethyl sulfoxide; oxolanes such as 1,3-dioxolane and 4-methyl-1,3-dioxolane; nitrogen-containing compounds such as acetonitrile, nitromethane and N-methyl-2-pyrrolidone; esters such as methyl formate, methyl acetate, ethyl acetate, butyl acetate, methyl propionate, ethyl propionate and phosphoric acid triester; inorganic acid esters such as sulfuric acid ester, nitric acid ester and hydrochloric acid ester; amides such as dimethylformamide and dimethylacetamide; glymes such as diglyme, triglyme and tetraglyme; ketones such as acetone, diethyl ketone, methyl ethyl ketone and methyl isobutyl ketone; sulfolanes such as sulfolane; oxazolidinones such as 3-methyl-2-oxazolidinone; sultone such as 1,3-propane sultone, 4-butane sultone and naphtha sultone; and the like. One or more selected from these electrolytic solutions can be used alone or in combination.

Among the above electrolytes and electrolyte solutions, a solution in which $LiPF_6$ is dissolved in carbonates is preferable. The concentration of the electrolyte in the solution varies depending on the electrode and electrolyte used is preferably 0.5 to 3 mol/L.

The application of the lithium ion secondary battery according to one embodiment of the present invention is not particularly limited. It may be used in a wide range of fields and examples of the application include a digital camera, a video camera, a portable audio player, a portable AV device such as a portable LCD TV, a mobile information terminal such as a notebook computer, a smartphone, or a mobile PC, a portable game device, an electric tool, an electric bicycle, a hybrid vehicle, an electric vehicle, and a power storage system.

The present embodiment can provide a composition serving as a binder having an excellent cycle capacity retention rate at high temperatures, a slurry for a positive electrode, and a battery using the composition.

EXAMPLES

The present invention will be described in more detail with reference to examples below. These are exemplary and do not limit the present invention.

[Example 1]

<Preparation of polyvinyl alcohol (PVA)>

600 parts by mass of vinyl acetate and 400 parts by mass of methanol are prepared and degassed by bubbling nitrogen gas. Then, 0.3 parts by mass of bis (4-tert-butylcyclohexyl) peroxydicarbonate were added thereto as a polymerization initiator, and polymerization was carried out at 60 °C for 4 hours. When the polymerization was stopped, the solid content concentration of the polymerization solution was 48% by mass, and the polymerization rate of vinyl acetate determined on the basis of the solid content was 80%. Methanol vapor was blown into the obtained polymerization solution to remove unreacted vinyl acetate, and then the polymerization solution was diluted with methanol so that the concentration of polyvinyl acetate was 40% by mass.

20 parts by mass of a methanol solution of sodium hydroxide of 10% by mass of sodium hydroxide were added to 1,200 parts by mass of the diluted polyvinyl acetate solution, and a saponification reaction was performed at 30°C for 2 hours.

The saponified solution was neutralized with acetic acid, filtered, and dried at 100°C for 2 hours to obtain PVA. The average degree of polymerization and saponification of the obtained PVA are shown in Table 1. The average degree of polymerization and saponification of PVA were measured by a method according to JIS K 6726.

<Preparation of composition>

1.65 parts by mass of the obtained PVA was added to 8.63 parts by mass of dimethyl sulfoxide and dissolved by stirring at 60°C for 2 hours. In addition, 2.72 parts by mass of acrylonitrile, 0.47 parts by mass of 2- (2-ethoxyethoxy) ethyl acrylate, and 0.45 parts by mass of ammonium peroxodisulfate dissolved in 1.51 parts by mass of dimethyl sulfoxide were added at 60°C, and graft-copolymerization was carried out with stirring at 60°C. After 4 hours from the start of the polymerization, the mixture was cooled to room temperature to stop the polymerization.

100 parts by mass of the obtained reaction solution were dropped to 300 parts by mass of methanol to precipitate the composition. The polymer was separated by filtration and vacuum-dried at room temperature for 2 hours, and further vacuum-dried at 80°C for 2 hours and a composition (binder) was obtained. The solid content was 9.76% by mass. The polymerization rate of acrylonitrile (the first monomer) and (2- (2-ethoxy) ethoxy) ethyl acrylate (the second monomer) was calculated to be 95% based on $^1$H-NMR.

In the obtained composition, the content ratio by mass of the polyvinyl alcohol structure is 30% by mass, the total content by mass of the first monomer unit and the second monomer unit is 70% by mass, and the graft ratio is 222%. The weight average molecular weight of the free polymer other than the stem polymer among the free polymer was 76200. These measuring methods will be described later in (Total content of first monomer unit and second monomer unit), (Graft ratio) and (Weight average molecular weight).

Table 1 shows the component and the like of the composition containing the obtained graft copolymer.

(Total content of first monomer unit and second monomer unit)

The total content by mass of the first monomer unit and the second monomer unit in the composition was calculated by the following formula (2).

$$((A \times B/100 + C \times D/100)/(A \times B/100 + C \times D/100 + E)) \times 100(\%) \quad ---(2)$$

A: Mass of the first monomer used for copolymerization (charged amount)
B: Polymerization rate (%) of the first monomer after the reaction
C: Mass of the second monomer used for copolymerization (charged amount)
D: Polymerization rate (%) of the second monomer after the reaction
E: Mass of PVA used for polymerization (charged amount)

The total content of the first monomer unit and the second monomer unit can also be calculated from the integration ratio by NMR. When the integral value per proton of polyvinyl alcohol is $S_{PVA}$ and each of the integral values per proton of the first monomer and the second monomer is $S_1$ and $S_2$, the total content of the first monomer unit and the second monomer unit can be calculated by the following formula (2-2).

$$((S_1+S_2)\times100)/(S_{PVA}+S_1+S_2) \quad \text{---(2-2)}$$

(Ratio of first monomer unit and second monomer unit)

The content ratio (% by mass) of the first monomer unit to the total amount of the first monomer unit and the second monomer unit in the composition was obtained from the following formula (3).

$$((A\times B/100)/(A\times B/100+C\times D/100)\times100(\%) \quad \text{---(3)}$$

The content ratio (% by mass) of the first monomer unit to the total amount of the first monomer unit and the second monomer in the composition can also be determined from the following equation-(3-2).

$$S_1\times100/(S_1+S_2) \quad \text{---(3-2)}$$

(Graft ratio)

1.00 g of the binder was weighed and added to 50 cc of special grade DMF (manufactured by Kokusan Chemical Co., Ltd.) and stirred at 80 °C for 24 hours at 1000 rpm. Next, the mixture was centrifuged for 30 minutes at a rotational speed of 10,000 rpm with a centrifuge (model: H2000B, rotor: H) manufactured by Kokusan Co., Ltd. After carefully separating the filtrate (DMF soluble component), the DMF insoluble component was vacuum-dried at 100 °C for 24 hours, and the graft ratio was calculated according to the above formula (4).

(Weight average molecular weight of free polymer other than the stem polymer)

The obtained filtrate at the time of centrifugation (DMF soluble component) was put into 1000 ml of methanol to obtain a precipitate. The precipitate was vacuum-dried at 80 °C for 24 hours, and the weight average molecular weight in terms of standard polystyrene was measured by GPC. GPC was measured under the following conditions.

Column: two of GPC LF-804, $\varphi 8.0 \times 300$ mm (manufactured by Showa Denko KK) were connected in series
Column Temperature: 40 °C
Solvent: 20 mM LiBr/DMF

(Glass transition temperature)

About 5 mg of the obtained sample was used to measure DSC (EXSTAR 6000 DSC-6200 manufactured by Seiko Instruments Inc.) according to JIS K 7121:1987. The intersection of the tangent line at the baseline and the tangent line at the steeply descending position in the endothermic region due to glass transition in the obtained DSC curve was read and used as Tg.

<Preparation of slurry>

5 parts by mass of the obtained binder were dissolved in 95 parts by mass of N-methylpyrrolidone (hereinafter, abbreviated as NMP) to obtain a binder solution. Further, 1 part by mass of acetylene black (Denka Black (registered trademark) "HS-100" manufactured by Denka Company Limited) and 1 part by mass of the binder solution in solid content were added and the mixture was stirred. After mixing, 98 parts by mass of $LiNi_{0.5}Mn_{1.5}O_4$ were added and the mixture was stirred to obtain a slurry for a positive electrode.

<Preparation of positive electrode>

The prepared slurry for positive electrode was applied to an aluminum foil having a thickness of 20 by an automatic coating machine so that the coating film has 140 mg/cm$^2$ and was preliminarily dried at 105°C for 30 minutes. Next, it was pressed with a roll press machine at a linear pressure of 0.1 to 3.0 ton/cm so that the positive electrode plate has an average thickness of 75 $\mu$m. Furthermore, the positive electrode plate was cut into a width of 54 mm to produce a strip-shaped positive electrode plate. After ultrasonically welding a current collecting tab made of aluminum to the end of the positive electrode plate, in order to completely remove volatile components such as residual solvent and adsorbed moisture, it was dried at 105 °C for 1 hour to obtain a positive electrode.

<Preparation of negative electrode>

96.6 parts by mass of graphite ("Carbotron (registered trademark) P" manufactured by Kureha Corporation) as a negative electrode active material, 3.4 parts by mass in the solid content of polyvinylidene fluoride ("KF polymer (registered trademark) # 1120" manufactured by Kureha Corporation) as a binder, and an appropriate amount of NMP was added and mixed with stirring so that the total solid content is 50% by mass, to obtain a slurry of the negative electrode.
The prepared slurry for negative electrode was applied to both sides of a copper foil having a thickness of 10 by an automatic coating machine so that each coating film has 70 mg/cm$^2$ and was preliminarily dried at 105 °C for 30 minutes. Next, it was pressed with a roll press machine at a linear pressure of 0.1 to 3.0 ton/cm so that the negative electrode plate has an average thickness of 90 as the total thickness including the coating films of both sides. Furthermore, the negative electrode plate was cut into a width of 54 mm to produce a strip-shaped positive electrode plate. After ultrasonically welding a current collecting tab made of nickel to the end of the negative electrode plate, in order to completely remove volatile components such as residual solvent and adsorbed moisture, it was dried at 105 °C for 1 hour to obtain a negative electrode.

<Preparation of lithium ion secondary battery>

The obtained positive electrode and negative electrode were combined and wound with a polyethylene microporous membrane separator having a thickness of 25 $\mu$m and a width of 60 mm to produce a spiral wound group, which was then inserted into a battery can. Next, 5 ml of a non-aqueous electrolyte solution (ethylene carbonate/methylethyl carbonate = 30/70 (mass ratio) mixed solution) in which LiPF$_6$ was dissolved at a concentration of 1 mol/L as an electrolyte was injected into the battery container. Thereafter, the inlet was caulked and sealed to produce a cylindrical lithium secondary battery having a diameter of 18 mm and a height of 65 mm. The battery performance of the prepared lithium ion secondary battery was evaluated with the following method.

(Cycle capacity retention rate after 50 cycles at 25°C)

At an environmental temperature of 25°C, a constant current and constant voltage charge of 5.00 ± 0.02 V of a charging voltage and 1 ItA was performed and a constant current discharge of 3.00 ± 0.02 V of a discharge end voltage and 1 ItA was performed. The charge and discharge cycles were repeated, and the ratio of the discharge capacity at the 50th cycle to the discharge capacity at the first cycle was obtained and used as the cycle capacity retention rate after 50 cycles at 25°C.

(Cycle capacity retention rate after 50 cycles at 45°C)

As a test under high temperature, at an environmental temperature of 45°C, a constant current and constant voltage charge of 5.00 ± 0.02 V of a charging voltage and 1 ItA was performed and a constant current discharge of 3.00 ± 0.02 V of a discharge end voltage and 1 ItA was performed. The charge and discharge cycles were repeated, and the ratio of the discharge capacity at the 50th cycle to the discharge capacity at the first cycle was obtained and used as the cycle capacity retention rate after 50 cycles at 45°C.

(Decrease rate in cycle capacity retention rate due to temperature rise)

As an index of the cycle capacity retention rate at high temperature, the change of "cycle capacity retention rate after 50 cycles at 25°C" to "cycle capacity retention rate after 50 cycles at 45°C" is measured, and used as the decrease rate in cycle capacity retention rate due to temperature rise. The decrease rate is calculated by the following formula (5).

Decrease rate of cycle capacity retention rate due to temperature rise (%)

= ((Cycle capacity retention rate after 50 cycles at 45°C)/(Cycle capacity retention rate after 50 cycles at 25°C)) x 100 ... (5)

[Examples 2 to 12 and Comparative Example 1 to 6]

The average degree of polymerization, degree of saponification, and content of PVA; the type and content of the first monomer unit; and the type and content of the second monomer unit as shown in Tables 1 to 2 were set to obtain compositions with the compositions and properties shown in Tables 1 to 2 by the same method as in Example 1.
The abbreviations used in the following tables and the like represent the following compounds. The monomer unit represents a monomer from which the monomer unit is derived.

    AN: acrylonitrile
    AA: acrylic acid
    EEA: 2- (2-ethoxyethoxy) ethyl acrylate
    PPA: 2,2,3,3,3-pentafluoropropyl acrylate
    DA: dodecyl acrylate
    MMA: methyl methacrylate
    VA: vinyl acetate
    ST: styrene
    PVA: polyvinyl alcohol

[Table 1]

<table>
<tr><td colspan="16">Examples 5, 6, 11 and 12 are Comparative Examples.</td></tr>
<tr><td colspan="3" rowspan="2">Table 1</td><td colspan="13">Examples</td></tr>
<tr><td>1</td><td>2</td><td>3</td><td>4</td><td>5</td><td>6</td><td>7</td><td>8</td><td>9</td><td>10</td><td>11</td><td>12</td></tr>
<tr><td colspan="3">polymerization degree of PVA</td><td>320</td><td>1640</td><td>3610</td><td>1710</td><td>1640</td><td>1640</td><td>1640</td><td>1640</td><td>1640</td><td>1640</td><td>1640</td><td>1640</td></tr>
<tr><td colspan="3">saponification degree of PVA</td><td>96.5</td><td>97.5</td><td>95.1</td><td>63</td><td>97.5</td><td>97.5</td><td>97.5</td><td>97.5</td><td>97.5</td><td>97.5</td><td>97.5</td><td>97.5</td></tr>
<tr><td rowspan="9">content (% by mass)</td><td colspan="2">PVA</td><td>30</td><td>30</td><td>30</td><td>30</td><td>5</td><td>50</td><td>30</td><td>30</td><td>30</td><td>30</td><td>30</td><td>30</td></tr>
<tr><td rowspan="2">first monomer unit</td><td>AN</td><td>44</td><td>44</td><td>44</td><td>44</td><td>58</td><td>31</td><td></td><td></td><td>60</td><td>35</td><td>44</td><td>44</td></tr>
<tr><td>AA</td><td></td><td></td><td></td><td></td><td></td><td></td><td>44</td><td>35</td><td></td><td></td><td></td><td></td></tr>
<tr><td rowspan="6">second monomer unit</td><td>EEA</td><td>26</td><td>26</td><td>26</td><td>26</td><td>37</td><td>19</td><td>26</td><td>35</td><td>10</td><td>35</td><td></td><td></td></tr>
<tr><td>PPA</td><td></td><td></td><td></td><td></td><td></td><td></td><td></td><td></td><td></td><td></td><td>26</td><td></td></tr>
<tr><td>DA</td><td></td><td></td><td></td><td></td><td></td><td></td><td></td><td></td><td></td><td></td><td></td><td>26</td></tr>
<tr><td>MMA</td><td></td><td></td><td></td><td></td><td></td><td></td><td></td><td></td><td></td><td></td><td></td><td></td></tr>
<tr><td>VA</td><td></td><td></td><td></td><td></td><td></td><td></td><td></td><td></td><td></td><td></td><td></td><td></td></tr>
<tr><td>ST</td><td></td><td></td><td></td><td></td><td></td><td></td><td></td><td></td><td></td><td></td><td></td><td></td></tr>
<tr><td colspan="3">graft rate(%)</td><td>222</td><td>225</td><td>216</td><td>222</td><td>1807</td><td>95</td><td>222</td><td>222</td><td>222</td><td>222</td><td>222</td><td>222</td></tr>
<tr><td colspan="3">$C_{PVA}/(C_M+C_{PVA})$</td><td>0.30</td><td>0.30</td><td>0.30</td><td>0.30</td><td>0.05</td><td>0.50</td><td>0.30</td><td>0.30</td><td>0.30</td><td>0.30</td><td>0.30</td><td>0.30</td></tr>
<tr><td colspan="3">$PM_1/(PM_1+PM_2)$</td><td>0.63</td><td>0.63</td><td>0.63</td><td>0.63</td><td>0.61</td><td>0.62</td><td>0.63</td><td>0.50</td><td>0.86</td><td>0.50</td><td>0.63</td><td>0.63</td></tr>
<tr><td colspan="3">glass transition temperature of composition (K)</td><td>316</td><td>316</td><td>316</td><td>316</td><td>281</td><td>347</td><td>325</td><td>295</td><td>363</td><td>295</td><td>348</td><td>360</td></tr>
<tr><td colspan="3">weight average molecular weight of free polymer other than stem polymer</td><td>76200</td><td>65200</td><td>55500</td><td>65200</td><td>240000</td><td>40000</td><td>75000</td><td>79500</td><td>69800</td><td>83900</td><td>99900</td><td>55600</td></tr>
<tr><td rowspan="3">evaluation items</td><td colspan="2">cycle capacity retention rate after 50 cycles at 25°C(%)</td><td>83</td><td>83</td><td>82</td><td>83</td><td>85</td><td>85</td><td>84</td><td>85</td><td>85</td><td>85</td><td>83</td><td>83</td></tr>
<tr><td colspan="2">cycle capacity retention rate after 50 cycles at 45°C(%)</td><td>82</td><td>81</td><td>81</td><td>81.6</td><td>81.2</td><td>81.5</td><td>82</td><td>84.1</td><td>80.3</td><td>84</td><td>80.1</td><td>78</td></tr>
<tr><td colspan="2">decrease rate of cycle capacity retention rate due to temperature rise(%)</td><td>-1.20%</td><td>-2.41%</td><td>-1.22%</td><td>-1.69%</td><td>-4.47%</td><td>-4.12%</td><td>-2.38%</td><td>-1.06%</td><td>-5.53%</td><td>-1.18%</td><td>-3.49%</td><td>-6.02%</td></tr>
</table>

EP 3 954 721 B1

15

[Table 2]

| Table 2 | | | Comparative example | | | | | |
|---|---|---|---|---|---|---|---|---|
| | | | 1 | 2 | 3 | 4 | 5 | 6 |
| polymerization degree of PVA | | | 1640 | 1640 | 1640 | 1640 | 1640 | 1640 |
| saponification degree of PVA | | | 97.5 | 97.5 | 97.5 | 97.5 | 97.5 | 97.5 |
| content (% by mass) | | PVA | 30 | 30 | 30 | 30 | 29 | 40 |
| | first monomer unit | AN | 44 | 44 | 44 | 10 | 15 | 55 |
| | | AA | | | | | | |
| | second monomer unit | EEA | | | | 60 | 56 | 5 |
| | | PPA | | | | | | |
| | | DA | | | | | | |
| | | MMA | 26 | | | | | |
| | | VA | | 26 | | | | |
| | | ST | | | 26 | | | |
| graft rate(%) | | | 222 | 222 | 222 | 222 | 233 | 166 |
| $C_{PVA}/(C_M+C_{PVA})$ | | | 0.30 | 0.30 | 0.30 | 0.30 | 0.29 | 0.40 |
| $PM_1/(PM_1+PM_2)$ | | | 0.63 | 0.63 | 0.63 | 0.14 | 0.21 | 0.92 |
| glass transition temperature of composition(K) | | | 400 | 375 | 398 | 249 | 255 | 399 |
| weight average molecular weight of free polymer other than stem polymer | | | 85500 | 72000 | 76200 | 77500 | 80000 | 85700 |
| evaluation items | cycle capacity retention rate after 50 cycles at 25°C(%) | | 82 | 84 | 81 | 84 | 82 | 81 |
| | cycle capacity retention rate after 50 cycles at 45°C(%) | | 72.8 | 75.5 | 72.4 | 70 | 71 | 70 |
| | decrease rate of cycle capacity retention rate due to temperature rise(%) | | -11.22% | -10.12% | -10.62% | -16.67% | -13.41% | -13.58% |

**Claims**

1. A composition comprising a graft copolymer, wherein

   the graft copolymer has a stem polymer and a plurality of branch polymers,
   the stem polymer has a polyvinyl alcohol structure,
   each of a first monomer unit and a second monomer unit being included in at least one of the plurality of branch polymers,
   the second monomer unit is different from the first monomer unit,
   a glass transition temperature of the composition is 260 K to 365 K, measured as described in the description,

   wherein

   when a content of the polyvinyl alcohol structure in the composition is $C_{PVA}$% by mass, and a total content of the first monomer unit and the second monomer unit in the composition is $C_M$% by mass, a ratio of the content of the polyvinyl alcohol structure to the total content of the polyvinyl alcohol structure, the first monomer unit and the second monomer unit ($C_{PVA}/(C_M+C_{PVA})$) is 0.25 to 0.3, and
   the second monomer unit is a alkoxypolyethylene glycol (meth) acrylate monomer unit.

2. The composition of Claim 1, wherein

the composition further comprises a free polymer,
the free polymer does not have a covalent bond with the graft copolymer, and
the free polymer contains at least one selected from the group consisting of a polymer having the polyvinyl alcohol structure and a polymer having the first monomer unit and/or the second monomer unit.

3. The composition of Claim 1 or 2, wherein the first monomer unit is a (meth) acrylonitrile monomer unit and/or a (meth)acrylic acid monomer unit.

4. The composition of any one of Claims 1 to 3, wherein
when a content of the first monomer unit is $PM_1$ mol%, and a content of the second monomer unit is $PM_2$ mol%, a ratio of an amount of the first monomer unit by mole to a total amount of the first monomer unit and the second monomer unit by mole contained in the composition ($PM_1/(PM_2+PM_1)$) is 0.1 to 0.9.

5. The composition of any one of Claims 1 to 4, wherein at least one of the plurality of branch polymers has a copolymerization structure of the first monomer unit and the second monomer unit.

6. The composition of any one of Claims 1 to 5, wherein an average polymerization degree of the polyvinyl alcohol structure in the composition is 300 to 4000.

7. The composition of any one of Claims 1 to 6, wherein a saponification degree of the polyvinyl alcohol structure in the composition is 60 to 100 mol%.

8. The composition of any one of Claims 1 to 7, wherein a graft ratio of the graft copolymer is 40 to 3000%.

9. A slurry for a positive electrode containing the composition of any one of Claims 1 to 8, a positive electrode active material, and a conductive auxiliary agent.

10. The slurry for the positive electrode of Claim 9, wherein a solid content of the composition with respect to a total solid content in the slurry for the positive electrode is 1 to 20% by mass.

11. The slurry for the positive electrode of Claim 9 or 10, wherein the cathode active material contains at least one selected from the group consisting of: $LiNi_XMn_{(2-X)}O_4$ (0<X<2); $Li(Co_XNi_YMn_Z)O_2$ (0<X<1, 0<Y<1, 0<Z<1, and X+Y+Z=1); and $Li(Ni_XCo_YAl_Z)O_2$ (0<X<1, 0<Y<1, 0<Z<1, and X+Y+Z=1).

12. The slurry for the positive electrode of any one of Claims 9 to 11, wherein the conductive auxiliary agent is at least one selected from the group consisting of (i) fibrous carbon, (ii) carbon black, and (iii) a carbon composite in which fibrous carbon and carbon black are interconnected.

13. A positive electrode comprising a metal foil and a coating film of the slurry for the positive electrode of any one of Claims 9 to 12 formed on the metal foil.

14. A battery comprising the positive electrode of Claim 13.

**Patentansprüche**

1. Zusammensetzung, umfassend ein Pfropfcopolymer, wobei

das Pfropfcopolymer ein Stammpolymer und eine Vielzahl von Verzweigungspolymeren aufweist,
das Stammpolymer eine Polyvinylalkoholstruktur aufweist,
wobei jede einer ersten Monomereinheit und einer zweiten Monomereinheit jeweils in mindestens einem der mehreren Verzweigungspolymere enthalten ist,
die zweite Monomereinheit sich von der ersten Monomereinheit unterscheidet,
eine Glasübergangstemperatur der Zusammensetzung 260 K bis 365 K, gemessen wie in der Beschreibung beschrieben, beträgt,

wobei

wenn ein Gehalt der Polyvinylalkoholstruktur in der Zusammensetzung $C_{PVA}$ Massenprozent beträgt und ein Gesamtgehalt der ersten Monomereinheit und der zweiten Monomereinheit in der Zusammensetzung $C_M$ Massenprozent beträgt, ein Verhältnis des Gehalts der Polyvinylalkoholstruktur zum Gesamtgehalt der Polyvinylalkoholstruktur, der ersten Monomereinheit und der zweiten Monomereinheit ($C_{PVA}/(C_M + C_{PVA})$) 0,25 bis 0,3 beträgt und
die zweite Monomereinheit eine Alkoxypolyethylenglykol(meth)acrylat-Monomereinheit ist.

2. Zusammensetzung nach Anspruch 1, wobei

die Zusammensetzung außerdem ein freies Polymer aufweist,
das freie Polymer keine kovalente Bindung mit dem Pfropfcopolymer aufweist, und
das freie Polymer mindestens eines enthält, das aus der Gruppe ausgewählt ist, die aus einem Polymer mit der Polyvinylalkoholstruktur und einem Polymer mit der ersten Monomereinheit und/oder der zweiten Monomereinheit besteht.

3. Zusammensetzung nach Anspruch 1 oder 2, wobei die erste Monomereinheit eine (Meth)acrylnitrilmonomereinheit und/oder eine (Meth)acrylsäuremonomereinheit ist.

4. Zusammensetzung nach einem der Ansprüche 1 bis 3, wobei
wenn ein Gehalt der ersten Monomereinheit $PM_1$ Mol-% ist und ein Gehalt der zweiten Monomereinheit $PM_2$ Mol-% ist, ein Verhältnis einer Menge der ersten Monomereinheit in Mol zu einer Gesamtmenge der ersten Monomereinheit und der zweiten Monomereinheit in Mol, die in der Zusammensetzung enthalten sind ($PM_1/(PM_2 + PM_1)$), 0,1 bis 0,9 ist.

5. Zusammensetzung nach einem der Ansprüche 1 bis 4, wobei mindestens eines der Vielzahl der Verzweigungspolymere eine Copolymerisationsstruktur aus der ersten Monomereinheit und der zweiten Monomereinheit aufweist.

6. Zusammensetzung nach einem der Ansprüche 1 bis 5, wobei ein durchschnittlicher Polymerisationsgrad der Polyvinylalkoholstruktur in der Zusammensetzung 300 bis 4000 beträgt.

7. Zusammensetzung nach einem der Ansprüche 1 bis 6, wobei ein Verseifungsgrad der Polyvinylalkoholstruktur in der Zusammensetzung 60 bis 100 Mol-% beträgt.

8. Zusammensetzung nach einem der Ansprüche 1 bis 7, wobei ein Pfropfverhältnis des Pfropfcopolymers 40 bis 3000 % beträgt.

9. Aufschlämmung für eine positive Elektrode, enthaltend die Zusammensetzung nach einem der Ansprüche 1 bis 8, ein positives Elektrodenaktivmaterial und ein leitfähiges Hilfsmittel.

10. Aufschlämmung für die positive Elektrode nach Anspruch 9, wobei ein Feststoffgehalt der Zusammensetzung in Bezug auf einen Gesamtfeststoffgehalt in der Aufschlämmung für die positive Elektrode 1 bis 20 Massenprozent beträgt.

11. Aufschlämmung für die positive Elektrode nach Anspruch 9 oder 10, wobei das aktive Kathodenmaterial mindestens eines enthält, das ausgewählt ist aus der Gruppe bestehend aus: $LiNi_X Mn_{(2-X)}O_4$ (0<X<2); $Li(Co_X Ni_Y Mn_Z)O_2$ (0<X<1, 0<y<1, 0<Z<1, und X+Y+Z=1); und $Li(Ni_X Co_Y Al_Z)O_2$ (0<X<1, 0<Y<1, 0<Z<1, und X+Y+Z=1).

12. Aufschlämmung für die positive Elektrode nach einem der Ansprüche 9 bis 11, wobei das leitfähige Hilfsmittel mindestens eines ist, das aus der Gruppe ausgewählt ist, die aus (i) Faserkohlenstoff, (ii) Ruß und (iii) einem Kohlenstoffverbund, in dem Faserkohlenstoff und Ruß miteinander verbunden sind, besteht.

13. Positive Elektrode, umfassend eine Metallfolie und einen auf der Metallfolie gebildeten Beschichtungsfilm aus der Aufschlämmung für die positive Elektrode nach einem der Ansprüche 9 bis 12.

14. Batterie, umfassend diepositive Elektrode nach Anspruch 13.

**Revendications**

1. Composition, comprenant un copolymère greffé, dans laquelle

   le copolymère greffé comporte un polymère de base et plusieurs polymères ramifiés,
   le polymère de base a une structure d'alcool polyvinylique,
   chacune d'une première unité monomère et d'une deuxième unité monomère étant incluse dans au moins l'un de la pluralité de polymères ramifiés,
   la deuxième unité monomère est différente de la première unité monomère,
   une température de transition vitreuse de la composition est comprise entre 260 K et 365 K, mesurée comme indiqué dans la description,

   dans laquelle

   lorsqu'une teneur en structure d'alcool polyvinylique dans la composition est de $C_{PVA}$ % en masse, et qu'une teneur totale en première unité monomère et en deuxième unité monomère dans la composition est de $C_M$ % en masse, un rapport de la teneur en structure d'alcool polyvinylique à la teneur totale en structure d'alcool polyvinylique, en première unité monomère et en deuxième unité monomère ($C_{PVA}/(C_M+C_{PVA})$) est compris entre 0,25 et 0,3, et
   la deuxième unité monomère est une unité monomère d'alcoxy polyéthylène glycol (méth) acrylate.

2. Composition de la revendication 1, dans laquelle

   la composition comprend en outre un polymère libre,
   le polymère libre n'a pas de liaison covalente avec le copolymère greffé, et
   le polymère libre contient au moins l'un choisi dans le groupe constitué d'un polymère ayant la structure d'alcool polyvinylique et d'un polymère ayant la première unité monomère et/ou la deuxième unité monomère.

3. Composition de la revendication 1 ou 2, dans laquelle la première unité monomère est une unité monomère de (méth) acrylonitrile et/ou une unité monomère d'acide (méth) acrylique.

4. Composition de l'une des revendications 1 à 3, dans laquelle
   lorsque une teneur de la première unité monomère est $PM_1$ mol%, et une teneur de la deuxième unité monomère est $PM_2$ mol%, un rapport d'une quantité de la première unité monomère en mole à une quantité totale de la première unité monomère et de la deuxième unité monomère en mole contenue dans la composition ($PM_1/(PM_2+PM_1)$) est de 0,1 à 0,9,

5. Composition de l'une des revendications 1 à 4, dans laquelle au moins l'un de la pluralité de polymères ramifiés a une structure de copolymérisation de la première unité monomère et de la deuxième unité monomère.

6. Composition de l'une quelconque des revendications 1 à 5, dans laquelle un degré de polymérisation moyen de la structure d'alcool polyvinylique dans la composition est compris entre 300 et 4000.

7. Composition de l'une quelconque des revendications 1 à 6, dans laquelle un degré de saponification de la structure d'alcool polyvinylique dans la composition est de 60 à 100 % en moles.

8. Composition de l'une des revendications 1 à 7, dans laquelle un taux de greffage du copolymère greffé est compris entre 40 et 3000%.

9. Boue pour électrode positive contenant la composition de l'une des revendications 1 à 8, un matériau actif d'électrode positive et un agent auxiliaire conducteur.

10. Boue pour l'électrode positive de la revendication 9, dans laquelle la teneur en solides de la composition par rapport à la teneur totale en solides de la boue pour l'électrode positive est de 1 à 20 % en masse,

11. Boue pour l'électrode positive de la revendication 9 ou 10, dans laquelle le matériau actif de cathode contient au moins l'un choisi dans le groupe constitué de : $LiNi_XMn_{(2-X)}O_4$ (0<X<2) ; $Li(Co_XNi_YMn_Z)O_2$ (0<X<1, 0<Y<1, 0<Z<1, et X+Y+Z=1) ; et $Li(Ni_XCo_YAl_Z)O_2$ (0<X<1, 0<Y<1, 0<Z<1, et X+Y+Z=1).

**12.** Boue pour l'électrode positive de l'une des revendications 9 à 11, dans laquelle l'agent auxiliaire conducteur est au moins un agent choisi dans le groupe constitué par (i) le carbone fibreux, (ii) le noir de carbone, et (iii) un composite de carbone dans lequel le carbone fibreux et le noir de carbone sont interconnectés.

**13.** Électrode positive comprenant une feuille métallique et un film de revêtement de la boue pour l'électrode positive de l'une des revendications 9 à 12 formé sur la feuille métallique.

**14.** Batterie comprenant l'électrode positive de la revendication 13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013098123 A
- JP 2013084351 A
- JP H6172452 B
- WO 2015053224 A
- EP 3922652 A1
- EP 3922653 A1
- JP 2016066601 A
- US 9318743 B2
- US 2018366732 A1
- WO 2018230599 A1